# EUROPEAN PATENT APPLICATION

(11) **EP 2 755 343 A1**
(43) Date of publication of application: **16.07.2014**
(21) Application number: 14151240.0
(22) Date of filing: 15.01.2014
(51) Int. Cl.: H04L 1/00, H04L 1/18

(54) **System and mobile terminal using data fragmentation**

(30) Priority: 15.01.2013 IT FI20130011
(71) Applicant: S.A.V.E.T. SRL, 53035 Monteriggioni (SI) (IT)
(72) Inventor: Fiochi, Ubaldo, 53035 Monteriggioni (Si) (IT)
(74) Representative: Fanfani, Stefano

(57) **Abstract**

A system and method for telecommunications between a plurality of mobile terminals and a receiving station, specially suitable for communicating data from areas featuring poor coverage, i.e. areas where transmission would not be usually possible, while safeguarding at the same time the life of the battery of the mobile terminal.

## Description

### Technical Field

The present invention belongs to the sector of the telecommunications using mobile networks, and in particular to the transmission techniques used to send data in a digital format from areas featuring poor signal coverage characteristics or from areas covered by different networks. The present invention makes reference to the data fragmentation techniques and specially deals with optimizing the duration of the batteries of the mobile terminals.

### Prior Art

Digital communication networks for mobile terminals have been implemented for a long time; different network structures, each featuring different characteristics, established themselves over time. Said networks mainly differ from each other in the maximum data transmission speed.

In this patent application document, by network we mean a set of elements that interact with each other to allow data transmission between two or several users that are located in different positions. Every network is characterized by a data communication protocol, which determines a hierarchical structure which describes the interfaces between the individual elements, in general the suite of TCP/IP (Transmission Control Protocol / Internet Protocol) protocols and the OSI (Open Systems Interconnection) protocols.

According to the OSI model, the hierarchical structure of the network comprises a number of layers which describe one or several aspects of the communication between two nodes of the network. Those experts in this sector well know that the OSI model comprises seven layers: physical layer, data link layer, network layer, transport layer, session layer, presentation layer, and application layer. It is also known that a network described on the basis of the suite of TCP/IP protocols comprises the application layer, the transport layer, the Internet layer, and the physical layer.

A system of networks comprises the totality of the different networks available for the communication between two or several users.

For a long time a need is felt about optimizing a number of limitations or malfunctionings that said networks present in those areas in which the level of the coverage signal is particularly low; as a matter of fact, in said areas interruptions in the transmission or long waiting times before performing a transmission are experienced.

These problems are particularly annoying when they are beyond the direct control of the terminal user, for instance in the field of automatic data transmission, including photographs, documents, or long text messages; in order to try and obviate these drawbacks, automatisms might be equipped in the mobile terminals, mainly dedicated to data transmission, including, for instance, the suite of TCP/IP protocols. The latter supports a check to see whether the transmission between a mobile terminal and a receiving station was successful through an exchange of auxiliary information during the main transmission and, if necessary, automatically sends the data again on the basis of appropriate strategies.

The effectiveness of a connection might vary in the course of one transmission for a variety of reasons, some intrinsic to the network, for instance crowding, and others that, on the contrary, depend on the fact that the mobile terminal, by moving might find coverage conditions that are less favourable than those in which it was upon starting the transmission.

In order to perform a transmission, a variety of systems have been set up, which operate a segmentation of the digital data, i.e. they transfer this digital data into a plurality of sequences of bits, sequences that feature dimensions capable of automatically adapting to the specific conditions of the network at the transmission time.

Said several systems might not adopt digital data segmentation only, but they might perform further operations, including, for instance, a temporary information filing. Not seldom are these systems strongly dependent on the network, so as to require information or freedom of access to network elements that are usually reserved for the exclusive use of the network operator. An example of such limitation is evident in patent application EP-A2-0197545, which describes an error control method in a mobile data transmission. Said method reduces the length of the transmitted bit packet on the basis of the errors detected by the receiving party, i.e. by a network element.

Said segmentation systems can operate in different points of the path followed by the information internally to the network; for instance, document EP-B-0905950 describes a communication protocol that allows to control the flow of the transmitted data by means of a network in order to increase the transmission speed.

Usually said segmentation systems operate at the lowest layers of the OSI model, patent application US-A1-20130013731 describes a device that segments data at the application layer, with the purpose of transmitting small quantities of data as fast as possible, to control sensors in real time.

However, the solutions known so far don't allow transmission when the network coverage is particularly poor.

For instance, patent application US-A1-20130013731 would get the same effects in the case of a constant radio signal level and a reduced number of participants whereas, in the case of a poor network coverage, battery consumption would become substantial.

As a matter of fact, below a given minimum coverage level data transmission would not be successful, notwithstanding the number of attempts made one after the other; consequently, in the case of a poor network coverage, a limitation common to the systems known so far consists in that they incessantly reiterate their unsuccessful transmission attempts, up to quickly exhausting the batteries that supply power to the mobile terminal, the mobile terminal user being not in a position to control what is happening.

Conversely, other systems suspend the transmission, in order to save the batteries, waiting until the mobile terminal finds better coverage conditions, this way deferring the transmission indefinitely in time.

Conversely, the system and the method according to the present patent application transmit the biggest quantity of data in the presence of poor quality signals, thus saving the battery.

### Objects and brief description of the invention

It has been observed that the limitations mentioned above, which prevent transmission from taking place, are experienced by the present telecommunication systems even when the coverage signal level of the mobile terminal, even though very low, could yet allow the transmission of fragments of data of very small sizes.

Therefore, the purpose of the present invention is to provide a method to perform data transmissions starting from mobile terminals located in areas featuring poor signal coverage or with a very much disturbed signals, for instance in areas where there are obstacles or under unfavourable meteorological conditions.

The method according to the present patent application allows to record the sending times of the just transmitted segments, within a predetermined period of time, for instance three minutes. On the basis of said recordings, the method allows to dynamically set an appropriate fragmentation level, which is identified by comparing the times of said recordings to times that are predetermined experimentally, each time selected on the basis of information, acquired by one or several sensors, e.g. the network type, the signal power level, or others.

For instance, the new fragmentation level can be calculated through a linear function, i.e. be made equal to the previous fragmentation level plus or minus a variation resulting from this comparison. Even though the example described here above refers to specific values, the method can use statistical approaches, as it usually occurs in this sector, thus eliminating, for instance, spurious values, if any.

The experiments necessary to identify said predetermined times can be easily carried out in the field by analyzing the results of transmission attempts made under known network conditions.

Unlike the known systems, which are implemented internally to the network that receives the signal transmitted by the mobile terminal and transmit said signal to the destination receiving station, the present invention is resident inside the mobile terminal and operates differently, depending on the specific environmental circumstances in which said mobile terminal is located.

### Brief description of drawings

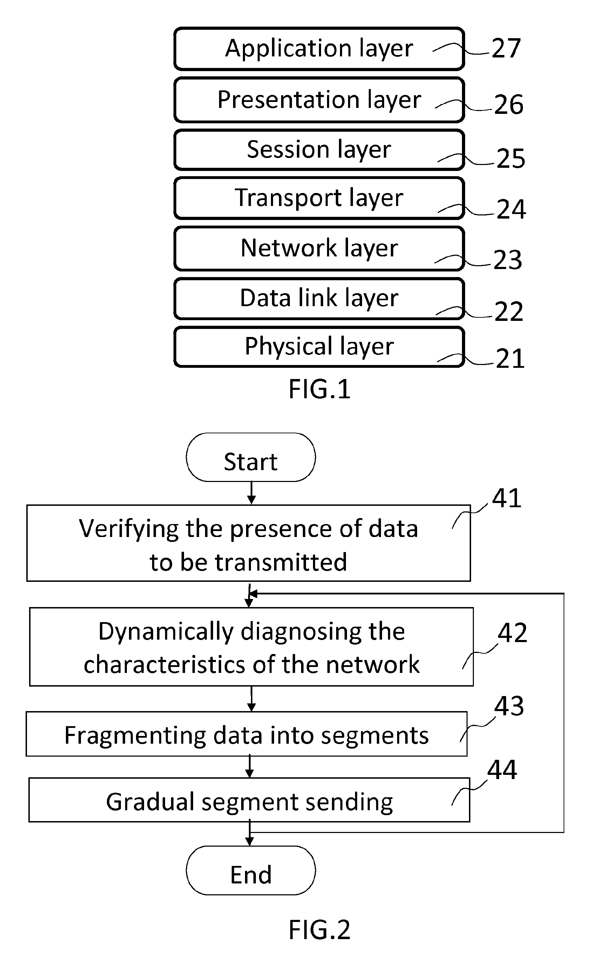

Figure 1 shows the hierarchical structure of a network according to the OSI model. Specifically, the structure shows the physical layer (21), the data link layer (22), the network layer (23), the transport layer (24), the session layer (25), the presentation layer (26), and the application layer (27).
Figure 2 shows a functional flow chart with the steps of the method and more specifically according to the present patent application, according to an invention embodiment that comprises the following steps:
   - Verifying (41) the presence of data to be transmitted;
   - Dynamically diagnosing (42) the characteristics of the network;
   - Fragmenting (43) the data to be transmitted into segments;
   - Gradually sending (44) said segments.
Figure 3 shows a functional flow chart with the sub-steps of the method according to an embodiment of the invention, which comprises the following steps:
   - Verifying (411) the presence of digital data to be transmitted;
   - If there is no data to be transmitted, waiting for and then verifying again, if there is data to transmit, acquiring (421) information from one or several sensors;
   - Proposing (422) a level of fragmentation into segments;
   - Fragmenting (431) the data into segments;
   - Transmitting (441) a first segment of data;
   - Verifying (442) the outcome of the transmission of said first segment of data;
   - If the transmission of said first segment of data is unsuccessful, sending (441) the same segment of data again and continuing to try and send it until transmission is successful or (443) until a maximum preset number of transmission attempts is reached and, in the latter case, verifying (447) whether a preset maximum fragmentation level has been overcame and, in the negative case, recording (423) the failed transmission of the segment or, in the positive case, waiting for (448) and then recording (423) the segment transmit failure.
   - If the transmission of said first segment of data is successful, acquiring (444) the transmission times and then verifying (445) said transmission times for correctness.
   - If the transmission times are correct, verifying (446) whether there are further segments to be transmitted and transmitting them, if the transmission times are not correct, recording them (424).

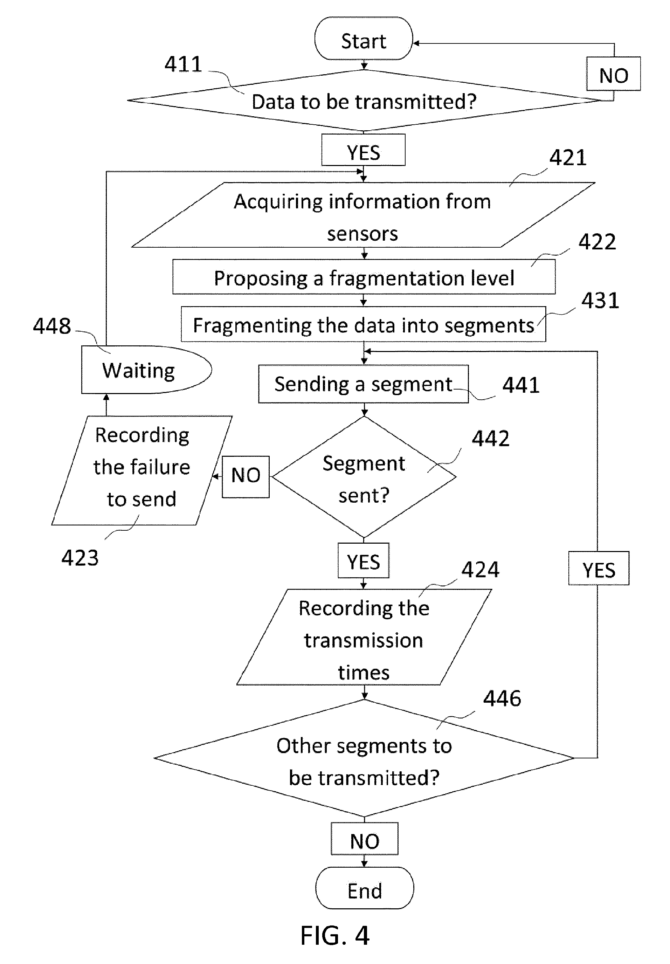

Figure 4 shows a functional flow chart with the sub-steps of the method, according to an embodiment of the invention, which comprises the following steps:
   - Verifying (411) the presence, or not, of digital data to be transmitted;
   - If there is no data to be transmitted, waiting for and then verifying again, if there is data to transmit, acquiring (421) information from one or several sensors;
   - Proposing (422) a level of fragmentation into segments;
   - Fragmenting (431) the data into segments;
   - Transmitting (441) a first segment of data;
   - Verifying (442) the outcome of the transmission of said first segment of data;
   - If the transmission of said first segment of data is unsuccessful, recording (423) the segment transmit failure, waiting for (448) and then reiterate the cycle.
   - If the transmission of said first segment of data is successful, acquiring (424) the transmission times and then verifying (446) whether there are further segments to be transmitted and, in that case, transmitting them.

### Detailed description of an embodiment of the invention

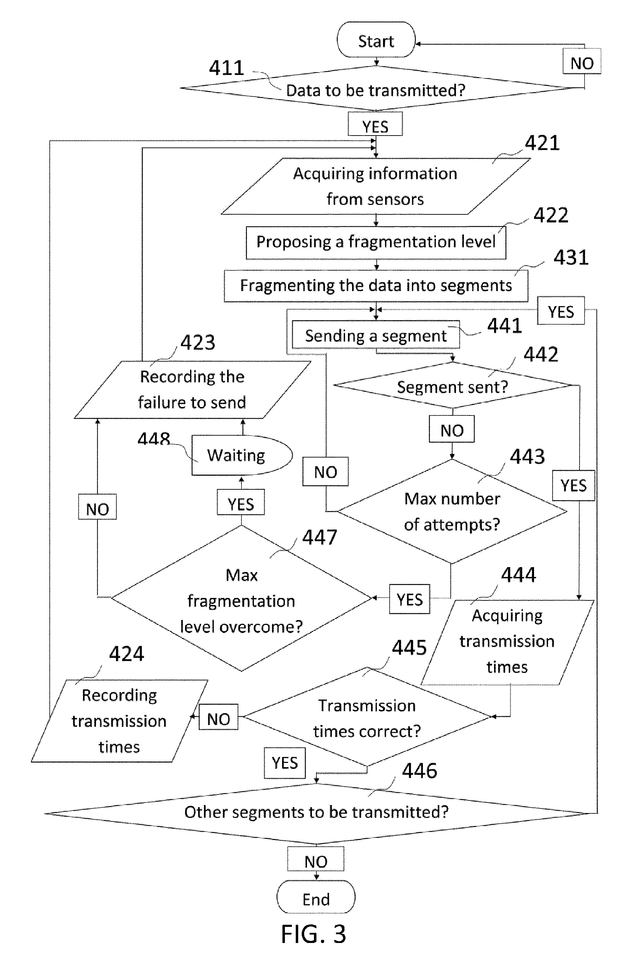

An embodiment of the method like that shown in Figure 3 will be described in details below.

The method is used for digital data telecommunications (5) between a mobile terminal (1) and a receiving station (3) via a system of networks (2), of the type that fragments the data to make the transmission from the mobile terminal to the receiving station easier if the coverage conditions of said mobile terminal (1) by said system of networks (2) is poor.

Said embodiment of the method comprises the following steps:
- Verifying (411) the presence of digital data to be transmitted;
- If there is no data to be transmitted, waiting for and then verifying again, if there is data to be transmitted, acquiring (421) information from one or several sensors;
- Proposing (422) a level of fragmentation into segments;
- Fragmenting (431) the data into segments;
- Transmitting (441) a first segment of data via a network interface device;
- Verifying (442) the outcome of the transmission of said first segment of data;
- If the transmission of said first segment of data is unsuccessful, sending (441) the same data segment again and continuing to try and send it until the transmission is successful or (443) until a preset maximum number of transmission attempts is reached, and in the latter case verifying (447) whether a maximum preset fragmentation level has been overcame and, in the negative case, recording (423) the failed segment transmission, in the positive case waiting for (448) and then recording (423) the failed transmission;
- If the transmission of said first data segment is successful, acquiring (444) the transmission times and then verifying (445) said transmission times for correctness;
- If the transmission times are correct, verifying (446) whether there are further segments to be transmitted and transmitting them, if the transmission times are not correct, recording them (424).

Advantageously, in the case of a failed transmission for three successive attempts, the method according to the present patent application can double the level of fragmentation determined in the "proposing (422) a level of fragmentation into segments" sub-step. Likewise, incorrect transmission times might determine an increased level of fragmentation according to a linear function that takes predetermined times into account.

The various predetermined times have been experimentally evaluated a priori and, during the application of the method, they are selected each time on the basis of the information sent by the sensors including, for instance, the type and the grade of coverage of the network.

In the embodiment described above, if a maximum fragmentation level is exceeded a 20 seconds suspension is introduced, however this time interval is not binding.

This suspension (448) allows to save energy in the case of a failed segment transmission, in that no transmission is performed in areas featuring poor signal coverages.

In other embodiments, for the same reason, further waiting times might be provided between some of the individual sub-steps.

It is worth to emphasize how the insertion of waiting times in the method according to the present patent application allows to drastically limit the use of the network interface device, which is responsible for an important percentage of the total power consumption of the battery of the mobile device.

The embodiment described above can be refined by taking advantage of the information acquired by one or several sensors equipped in the mobile terminal. For instance, knowing the type of the network the terminal is connected to makes it possible to determine the fragmentation level more accurately, especially in the case of the first transmission attempt. The same information can be used to select the predetermined or pre-set values.

In particular, if one or several information items relevant to the available network are available, then the data fragmentation level is obtained by adding to a pre-set reference real value, determined as a function of the network type, a further real value, calculated upon comparison of the sending times of the previous segments as referred to a given pre-set sending time, the latter being obtained experimentally under a similar condition, for instance in the same network and in correspondence with the same RF signal power level.

The method according to the present patent application is usually implemented through a mobile terminal (1) comprising one or several sensors, at least one network interface device, and at least one storage device used to store the digital data produced by said one or several sensors. Furthermore, said mobile terminal (1) comprises at least one programmable logic unit, which said devices interface to.

In a particularly advantageous embodiment, said mobile terminal (1) is a multifunction cellular telephone. Such a terminal makes it possible to have some or all components necessary to implement this method available in a simple and economical way.

As a matter of fact, the most modern cellular telephones are usually already equipped with a programmable logic unit and sensors including, for instance, a geo-referenced positioning sensor or an image and/or video clip sensor or even a temperature sensor or other parameter sensor.

Advantageously a modern cellular telephone usually is already equipped with a network interface device capable of implementing all layers of the OSI model; by using, just as an example, the SOAF protocol, the hypertext transfer protocol or HTTP, the suite of TCP/IP protocols, and the universal mobile telecommunication systems or UMTS. Possible alternatives to the UMTS system are represented by the GPRS technology (where GPRS stands for General Packet Radio Service) or by the LTE technology (where LTE stands for Long Term Evolution).

Furthermore, said network interface device can be equipped with sensors that record the type of network available internally to said system of networks (2).

A convenient application of said method is represented by a system used to monitor and manage works taking place in outdoor yards, comprising at least one or several of said mobile terminals (1) and said receiving station (3).

Advantageously can said receiving station (3) monitor the progress of the works in the outdoor yard on the basis of the information acquired by said one or several sensors.

Thanks to the application of said method, it is possible from the receiving station to monitor the progress of the works even in the case of yards located in areas featuring poor signal coverages.

An example of such application is represented by the monitoring and management of cut down operations in woodlands or of areas close to electrical power transmission networks.

## Claims

1. A method for digital data telecommunications (5), via a system of networks (2) and independent of the characteristics of the networks, between a mobile terminal (1), which comprises at least one network interface device, and a receiving station (3), of the type implemented in said mobile terminal (1) upstream said network interface device and that fragments data to make their transmission from the mobile terminal to the receiving station easier, when the coverage of said mobile terminal (1) by said system of networks (2) is poor, **characterized in that** said method comprises the following steps:
- Verifying (41) the presence of data to be transmitted;
If there is no data to transmit the verification phase (41) is repeated at a later time, if there is data to be transmitted the dynamically diagnosing step (42) is executed, dynamically diagnosing step (42) comprises the following substeps:
- Proposing a fragmentation level of data on the basis of a comparison of the information acquired and/or recorded after the last transmission attempt, with pre-set reference values;
- Activating the data fragmentation step (43) into segments;
- Recording the transmission times that were necessary to send the previous segments.
After the dynamically diagnosing step (42), executing the following steps:
- Fragmenting (43) the data to be transmitted into segments;
- Gradually sending (44) said segments.

2. A method according to the previous claim, **characterized in that** the frequency of said check (41) is constant over time.

3. A method according to one or several of the previous claims, **characterized in that** said dynamic diagnosis step (42) also comprises one or several of the following sub-steps:
- Acquiring the characteristics of the mobile terminal (1);
- Analyzing the dimensions of the data to be transmitted;
- Acquiring the characteristics of the coverage offered by the system of networks (2) in the area where said mobile terminal (1) is located;
- Recording the number of attempts to connect to the receiving station (3) that were necessary to send the segments.

4. A method according to one or several of the previous claims, **characterized in that** the data fragmentation level is obtained by adding to a pre-set reference value, dependent on the type of the transmission network used, a further value, calculated upon comparison of the sending times of the previous segments as referred to a pre-set sending time, the latter being obtained experimentally under a similar condition; the presence of similar conditions being evaluated on the basis of the information acquired.

5. A method according to one or several of the previous claims, **characterized in that** said data fragmentation step (43) into segments comprises the following sub-steps:
- Fragmenting the data into segments on the basis of said level of fragmentation;
- Activating the gradual segment sending (44) step.

6. A method according to one or several of the previous claims, **characterized in that** said gradual segment sending (44) step comprises one or several of the following sub-steps:
- From said mobile terminal (1), sending to said receiving station (3) a data segment (51) having the proposed size, via at least one network interface device;
- If the transmission of said segment (51) fails, repeating the sub-step consisting of sending, from the mobile terminal to the receiving station (3), via at least one network interface device, a data segment (51) having the proposed size, up to a preset maximum number of attempts;
- Upon reaching the maximum preset number of attempts to transmit said segment (51), repeating the dynamic diagnosis step (42);
- Acquiring the transmission time for said segment (51);
- If the transmission of said segment (51) is unsuccessful, updating the recordings according to the previous claim 3;
- Checking for the presence of segments to be transmitted;
- Repeating the gradual segment sending (44) step in the presence of further segment to be transmitted;
- Repeating the check for presence of data to be transmitted step (41) in the absence of further segments to be transmitted.

7. A method according to one or several of the previous claims, **characterized in that,** if the transmission of said segment (51) is unsuccessful, then said dynamic diagnosis step (42) proposes a different level of data fragmentation, account being taken of the new information acquired and/or recorded after the last transmission attempt.

8. A method according to the previous claim, **characterized in that** said different level of fragmentation is greater than the previous level of fragmentation.

9. A method according to one or several of the previous claims, **characterized in that** the transmission of said segment (51) can be said to be unsuccessful both on the basis of the failed transmission and on the basis of the time to transmit said the segment (51) going beyond pre-set reference time values.

10. A method according to one or several of the previous claims, **characterized in that** following the failed transmission of said segment (51), the transmission attempts are suspended whenever the coverage signal level drops below a preset minimum value.

11. A method according to one or several of the previous claims, **characterized in that** it comprises waiting intervals between any two consecutive sub-steps.

12. A mobile terminal (1) for digital data telecommunications between said mobile terminal and a receiving station (3) via a system of networks, said mobile terminal (1) comprising one or several sensors, at least one network interface device, at least one storage device to store the digital data produced by said one or several sensors, said at least one interface device and at least one data storage device being interfaced to at least one programmable logic unit, **characterized in that** said programmable logic unit (14) is programmed to execute the digital data telecommunications (5) method according to one or several of the previous claims.

13. A mobile terminal (1) for bidirectional digital data telecommunications (5) according to one or several of the previous claims, **characterized in that** said at least one sensor is a geo-referenced positioning sensor and/or a digital device used to acquire images or video clips.
